# EUROPÄISCHE PATENTSCHRIFT

(11) **EP 2 639 487 B1**
(45) Veröffentlichungstag und Bekanntmachung des Hinweises auf die Patenterteilung: **09.09.2015**
(21) Anmeldenummer: 12159867.6
(22) Anmeldetag: 16.03.2012
(51) Int. Cl.: F16L 21/08, F16L 55/115, F16L 21/06

(54) **Rohrkupplung mit deckel**
Pipe coupling with end cap
Raccord pour tubes avec bouchon

(43) Veröffentlichungstag der Anmeldung: 18.09.2013
(73) Patentinhaber: GE Jenbacher GmbH & Co OG, 6200 Jenbach (AT)
(72) Erfinder: Häusl, Günter, 6200 Jenbach (AT)
(74) Vertreter: Hofinger, Stephan

(56) Entgegenhaltungen:
- US-A- 3 207 184
- US-A- 3 713 463
- US-A- 4 607 664
- US-A- 5 850 854
- US-A1- 2008 224 079

## Beschreibung

Die Erfindung betrifft eine Anordnung mit einer Rohrkupplung mit einem Deckel, wobei die Rohrkupplung mit einem ihrer Enden an ein Rohr ankuppelbar ist und die ein Schellenband und ein Spannmittel zum Verspannen des Schellenbandes aufweist. Weiter betrifft die Erfindung die Verwendung einer solchen Anordnung.

Nächstliegender Stand der Technik ist die GB 2 389 395 A, die eine Rohrkupplung mit Verankerungsringen offenbart. Die in dieser Druckschrift offenbarte Rohrkupplung dient dem Verbinden zweier Rohre. Oftmals ist man jedoch mit der Aufgabe konfrontiert, ein Rohrende dichtend abzuschliessen. Dies ist beispielsweise erforderlich, wenn kurzzeitig eine Prüfung des Rohres auf Dichtigkeit oder Druckresistenz erfolgen soll oder wenn bestimmte Rohranschlüsse zweitweise oder dauerhaft nicht genutzt werden. Weiter besteht diese Aufgabe z. B. auch bei einer modulartigen oder seriellen Anordnungen von Maschinen, bei der die letzte Maschine in der Reihe keine nachfolgende Verbindung hat und der sonst dafür vorgesehene rohrförmige Anschluss bzw. Stutzen zu verschliessen ist.

Im Stand der Technik gibt es eine Vielzahl an Lösungen, Rohrenden zu verschliessen.

Die in der EP 1 087 172 A2 gezeigte Vorrichtung benötigt ein entsprechend ausgebildetes Rohrende, damit das über das freie Rohrende gestülpte Verschlusselement mit einer Schelle festlegbar ist.

Eine Abdeckplatte gemäss der DE 199 49 697 A1 weist einen Kragen mit mindestens drei, nach aussen abragenden Klemmelementen auf, welche nach dem Einführen des Kragens in das freie Rohrende an dessen Innenwand anliegen und eine Abdeckplatte im Rohrende fixieren.

Die in der GB 2 342 970 A offenbarte Endplatte wird mittels einer separaten Schelle und mehreren Dichtungs- und Abstandselementen an einem Rohrende fixiert.

Gemäss GB 564,070 A wird ein mit einem Aussengewinde versehenes, freies Rohrende mit einem Deckel verschlossen, der ebenfalls ein umfangseitig angeordnetes Aussengewinde aufweist. Mittels einer Überwurfmutter wird der Deckel an dem Rohrende fixiert.

Abgesehen davon, dass einige dieser Lösungen einen nur schlecht dichtenden Rohrabschluss darstellen, besteht ein grosser Nachteil darin, dass das betreffende Rohrende eine speziell auf die Abdeckung abgestimmte Form mit entsprechenden Fixiervorrichtungen aufweisen muss. Beispielsweise müssen Gewinde, Schrauben, Nuten für einen einclipsbaren Deckel oder nach aussen abstehende Flansche vorgesehen werden. Die im Stand der Technik vorgeschlagenen Lösungen können daher nur im Zusammenspiel mit sehr spezifischen und daher auch kostspieligen Rohren verwirklicht werden. Ausserdem ist das Abschliessen des Rohres aufgrund der besonderen Formen und Befestigungsmittel sehr aufwendig.

Eine Anordnung gemäss dem Oberbegriff des Anspruchs 1 ist aus der Ausführungsform der Abbildung 43 der US 2008/224079 A1 bekannt.

Aufgabe der vorliegenden Erfindung ist es somit, diese Nachteile zu beseitigen und eine Anordnung von einer Rohrkupplung mit einem Deckel bereitzustellen, worin die Rohrkupplung mit einem ihrer Enden an ein Rohr ankuppelbar ist und gleichzeitig einen Abschluss dieses Rohres bewirkt. Die Anordnung soll auch an herkömmliche Rohre, die ohne besondere Formgebung oder Befestigungsvorrichtungen an ihren Enden ausgebildet sind, anbindbar sein. Das Festlegen der Anordnung an das Rohr soll einfach, schnell und zuverlässig erfolgen. Der Abschluss des Rohres soll dichtend, zuverlässig und vorzugsweise druckresistent sein.

Diese Aufgaben werden mit einer Anordnung der eingangs genannten Art dadurch gelöst, dass der Deckel topfförmig ausgebildet ist und der Bodenabschnitt des topfförmigen Deckels eine Wölbung aufweist, welche in das Innere der Rohrkupplung ragt.

Die Öffnung des topfförmigen Deckels ist somit dem Inneren der Rohrkupplung abgewandt. Diese Ausbildung des Deckels führt zu einem leicht handhabbaren und in der richtigen Position in das Schellenband einsetzbaren Deckel. Gleichzeitig wird durch die topfförmige Ausgestaltung eine höhere Druckbeständigkeit der durch den Deckel geschaffenen Abdeckung gegenüber Drücken im angebundenen Rohr bewirkt.

Dadurch wird die Druckbeständigkeit weiter gesteigert, da die Kräfte zu einem grossen Teil in die Wände des topfförmigen Deckels eingeleitet werden.

Derselbe Mechanismus, der zum Verspannen der Rohrkupplung an dem Rohr verwendet wird, nämlich das Festziehen des Schellenbandes durch die Spannmittel, wird erfindungsgemäss zum Einspannen des Deckels verwendet. Dies ergibt eine einfache Konstruktion und eine zuverlässige Fixierung des Deckels im Bereich des dem Rohr abgewandten Endes der Rohrkupplung.

Unter einer Rohrkupplung wird in vorliegender Anmeldung eine Vorrichtung verstanden, die mit einem ihrer Enden an ein Rohr ankuppelbar ist und dieses Rohr mit einer Abdeckung zum Abschliessen des Rohres verbindet.

Die Rohrkupplung ist vorzugsweise derart ausgebildet, dass das anzubindende Rohr in axialer Richtung in die Rohrkupplung einschiebbar ist. In eingeschobenem Zustand des Rohres wird das Schellenband (Mantelstück) mit dem Spannmittel festgezogen, wodurch die Rohrkupplung an dem entsprechenden Rohrende fixiert wird.

Das Spannmittel kann auf beliebige Art und Weise ausgebildet sein, um durch seine Betätigung das in Art einer Rohrschelle ausgebildete Schellenband zusammenzudrücken beziehungsweise zusammenzuziehen. Damit wird die von dem Schellenband umgebene Querschnittsfläche verkleinert, die Rohrkupplung an dem Rohr fixiert und der Deckel auf der anderen Seite eingeklemmt bzw. eingespannt. Vorzugsweise besteht das Spannmittel aus zumindest einer Schraubverbindung, die mit den beiden einander gegenüberliegenden, einen Spalt bildenden Abschnitten des Schellenbandes verbunden sind. Durch Betätigen der Schrauben ändert sich dabei die Breite des Spaltes.

Zur Herstellung einer erfindungsgemässen Anordnung von einer Rohrkupplung mit einem Deckel kann eine herkömmliche Rohrkupplung herangezogen werden und an einem ihrer Enden mit einem entsprechend angepassten Deckel versehen werden.

Bevorzugt ist ein Dichtelement, vorzugsweise aus einem elastischen Material, wie z. B. Gummi, im Schellenband vorgesehen, womit eine zuverlässig dichtende Verbindung einerseits mit dem Rohr und andererseits mit dem Deckel erreichbar ist. Vorzugsweise kleidet das Dichtelement die Innenwand des Schellenbandes vollflächig aus, was eine vorteilhafte Abdichtung entlang des gesamten Umfangs und insbesondere auch im Bereich des Spannmittels ermöglicht.

Bevorzugt ist ein Endabschnitt des Dichtelementes zwischen dem Schellenband und dem Deckel eingespannt, wodurch eine besonders zuverlässige Abdichtung erreicht wird. Diese Abdichtung wird zusätzlich durch das Verspannen des Schellenbandes und dem damit verbundenen Andrücken des Endabschnittes der Dichtung gegen die Innenseite des Schellenbandes einerseits und gegen den Deckel andererseits bewirkt bzw. verstärkt.

Bevorzugt weist der Randbereich des Deckels einen konisch ausgebildeten Abschnitt auf, der sich zum freien Ende hin erweitert und dessen dem Schellenband zugewandte Fläche vorteilhaft an einem entsprechend geformten Abschnitt des Dichtelementes formschlüssig anliegt. Diese Formgebung ergibt einerseits eine grössere Dichtfläche. Andererseits kann durch axiales Andrücken des Deckels in Richtung des Dichtelementes die Dichteffizienz gesteigert werden. Das Andrücken des Deckels kann z. B. durch einen Flansch an der Stirnseite des Schellenbandes im Zusammenspiel mit dem Verspannen bzw. Festziehen des Schellenbandes bewirkt werden.

Bevorzugt weist der Deckel einen im Wesentlichen zylinderförmigen Abschnitt auf, der vorzugsweise an einem entsprechend geformten Abschnitt des Dichtelementes formschlüssig anliegt. Dadurch kann die Dichtfläche weiter vergrössert werden. Ausserdem wird durch das Verspannen des Schellenbandes eine radiale Kraft auf die Kontaktflächen des zylinderförmiger Abschnittes und des Dichtelementes ausgeübt, die ein zuverlässiges Zusammenpressen der beiden Teile bewirkt. Der zylinderförmige Abschnitt wird vorzugsweise durch die Wand des zuvor erwähnten topfförmigen Deckels gebildet.

Bevorzugt schliesst der zylinderförmige Abschnitt des Deckels an den konisch ausgebildeten Abschnitt des Deckels in Richtung des Inneren der Rohrkupplung an. Dies ermöglicht eine einfache und platzsparende Lösung, wobei insbesondere die Formgebung des Endabschnittes des Dichtelementes vereinfacht wird.

Bevorzugt ist der Deckel vollständig von dem Schellenband umgeben, wodurch sich ein platzsparender und ein den Deckel vor mechanischen Einflüssen schützender Aufbau ergibt.

Bevorzugt weist das Schellenband an zumindest einer seiner Stirnseiten einen nach innen gerichteten Flansch auf, der einen Anschlag für den Deckel im Inneren des Schellenbandes ausbildet. Dadurch wird einerseits eine unbeabsichtigte Entfernung des Deckels verhindert. Andererseits kann der Deckel mit Hilfe des Flansches und mittels Verspannen der Spannmittel gegen das Dichtelement gedrückt werden.

Bevorzugt ist das Schellenband aus einem durchgehenden, rohrförmig vorgebogenen Band gebildet, wobei im Bereich der Enden des Bandes ein Spalt ausgebildet ist, dessen Breite durch das Spannmittel veränderbar ist. Dies stellt eine besonders einfache, aber leicht handhabbare Ausbildung der Erfindung dar.

Bevorzugt ist ein vorzugsweise kegelstumpfförmiger, in das Innere der Rohrkupplung ragender Verankerungsring vorgesehen, der vorteilhaft im Bereich des Endes der Rohrkupplung angeordnet ist, das dem Ende der Rohrkupplung mit dem Deckel abgewandt ist. Beim Verspannen der Spannmittel kommt das freie Ende des Verankerungsrings mit der Aussenwandung des Rohres in Anlage und gräbt sich, in Abhängigkeit der Materialeigenschaften des Rohres entsprechend in diese ein. Dadurch ist die Rohrkupplung und somit auch der Deckel in seiner Position besonders vorteilhaft fixiert.

Erfindungsgemäss wird die Aufgabe auch durch eine Verwendung einer Anordnung von einer Rohrkupplung mit einem Deckel zum Abschliessen einer Rohrleitung gelöst.

Bevorzugt wird die Anordnung zum vorübergehenden Abschliessen einer Rohrleitung bei der Prüfung einer oder mehrerer Rohrfunktionen, insbesondere Druckresistenz und/oder Dichtigkeit, verwendet.

Bevorzugt wird die Anordnung bei einer modularen Anordnung von Gasmotoren als Abschlusselement für das letzte Modul verwendet.

Bei allen Anwendungen der erfindungsgemässen Anordnung kann eine bereits bestehende Rohrkupplung, die zwei Rohre miteinander verbindet, gelöst werden, wobei ein Rohr (zumindest vorübergehend) entfernt wird und anstelle des Rohres ein Deckel erfindungsgemäss eingesetzt und eingespannt wird. Es sind somit keine zusätzlichen Vorrichtungen zum Abschliessen eines Rohres erforderlich, was die Handhabung bei vielen Anwendungen wesentlich erleichtert und kostengünstiger macht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Rohrkupplung in perspektivischer Ansicht,
- Fig. 2: die Rohrkupplung aus Fig. 1 im Schnitt durch die Längsachse,
- Fig. 3: das Detail B aus Fig. 2 in vergrösserter Darstellung, und
- Fig. 4: einen Verankerungsring, der optional zwischen Flansch und Deckel eingesetzt werden kann.

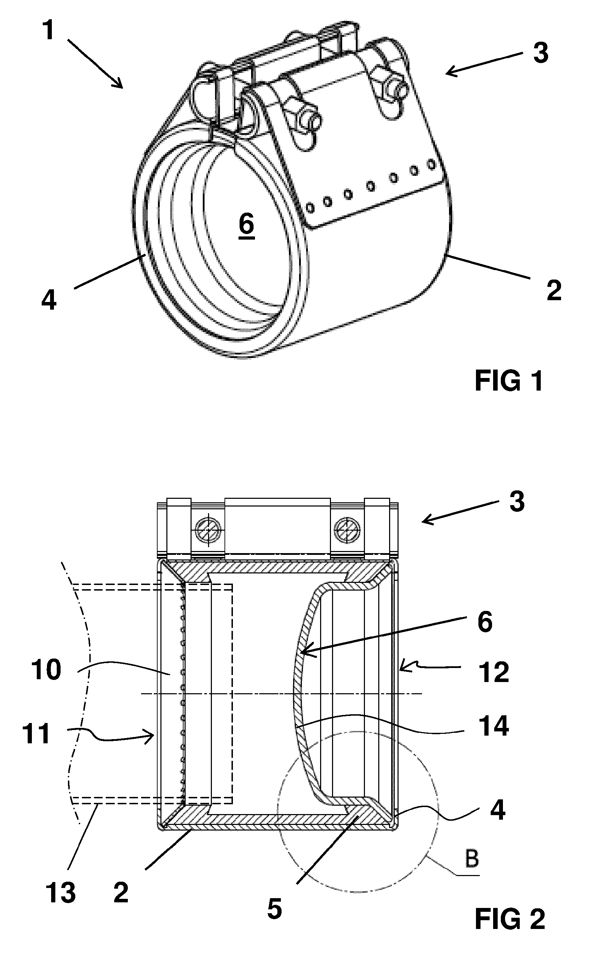

Fig. 1 zeigt eine Rohrkupplung 1, die mit einem ihrer Enden 11 an ein Rohr 13 (in Fig. 1 nicht dargestellt) ankuppelbar ist. Die Rohrkupplung 1 weist dazu ein Schellenband 2 und ein Spannmittel 3 zum Verspannen bzw. Festziehen des Schellenbandes 2 auf. Das andere (in Fig. 1 nicht sichtbare) Ende 12 der Rohrkupplung 1 ist durch einen in das Schellenband 2 eingesetzten und durch Verspannen des Schellenbandes 2 eingespannten Deckel 6 abgeschlossen.

In der dargestellten Ausführungsform ist der Deckel 6 vollständig vom Schellenband 2 umgeben. Das Schellenband 2 weist darüber hinaus an seinen beiden Stirnseiten jeweils einen nach innen gerichteten Flansch 4 aufweist, der als Anschlag für den Deckel 6 im Inneren des Schellenbandes 2 dient und diesen bei Druckbeaufschlagung sicher zurückhält.

In der dargestellten Ausführungsform ist das Schellenband 2 aus einem durchgehenden, rohrförmig vorgebogenen Band gebildet, wobei im Bereich der Enden des Bandes ein Spalt (in Fig. 1 oben dargestellt) ausgebildet ist, dessen Breite durch das Spannmittel 3 veränderbar ist.

Fig. 2 zeigt einen Schnitt entlang der Längsachse der Rohrkupplung 1. Ein im Wesentlichen rohrförmiges Dichtelement 5, vorzugsweise aus einem elastischen Material, wie Gummi, ist im Schellenband 2 eingesetzt und kleidet die Innenwand des Schellenbandes 2 im Wesentlichen vollständig aus. Ein Endabschnitt der Dichtung 5 ist dabei zwischen dem Schellenband 2 und dem Deckel 6 eingespannt.

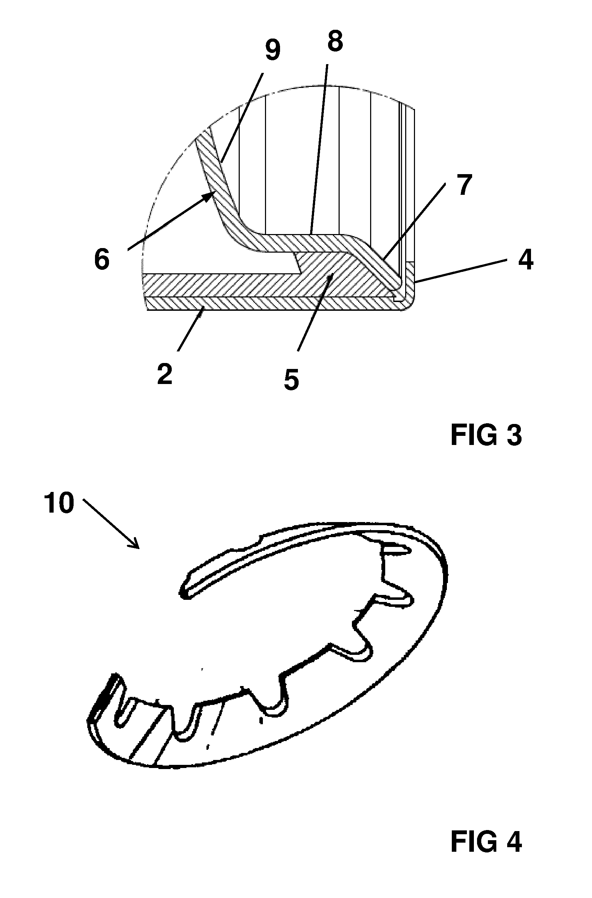

Wie aus den Fig. 2 und 3 ersichtlich ist der Deckel 6 topfförmig ausgebildet ist, dessen Bodenabschnitt 14 dem Inneren der Rohrkupplung 1 zugewandt bzw. dessen Öffnung dem Inneren der Rohrkupplung 1 abgewandt ist. Der Bodenabschnitt 14 des topfförmigen Deckels 6 weist eine Wölbung 9 auf, die in das Innere der Rohrkupplung 1 ragt.

Die Wand des topfförmigen Deckels 6 weist zwei unterschiedliche Abschnitte 7 und 8 auf: Der Randbereich des topfförmigen Deckels 6 weist einen konisch ausgebildeten Abschnitt 7 auf, der sich zum freien Ende hin erweitert und dessen dem Schellenband 2 zugewandte Fläche an einem entsprechend geformten Abschnitt des Dichtelementes 5 formschlüssig anliegt.

An den konischen Abschnitt 7 schliesst sich ein im Wesentlichen zylinderförmiger Abschnitt 8 an, der in der dargestellten bevorzugten Ausführungsform an einem entsprechend geformten Abschnitt des Dichtelementes 5 formschlüssig anliegt. Der zylinderförmige Abschnitt 8 schliesst sich dabei an den konisch ausgebildeten Abschnitt 7 in Richtung des Inneren der Rohrkupplung 1 an.

In einer bevorzugten Ausführungsform weist die Rohrkupplung 1 im Bereich ihres Endes 11 einen offenen, vorzugsweise kegelstumpfförmigen Verankerungsring 10 auf, der zwischen dem entsprechenden Flansch 4 und dem entsprechenden Abschnitt des Dichtelementes 5 zu liegen kommt. Beim Verspannen des Spannmittels 3 wird der Verankerungsring 10 eingespannt und nach innen in Richtung des Deckels 6 bzw. an die Aussenwandung des Rohres 13 gedrückt. Eine bevorzugte Ausgestaltung des Verankerungsringes 10 mit nach innen gerichteten Zähnen zum besseren Greifen ist in Fig. 4 dargestellt

Eine erfindungsgemässe Rohrkupplung 1 eignet sich insbesondere zum Abschliessen einer Rohrleitung 13 oder eines rohrförmigen Stutzens. Insbesondere eignet sich diese zum vorübergehenden Abschliessen einer Rohrleitung oder eines rohrförmigen Stutzens bei der Prüfung einer oder mehrerer Rohrfunktionen, insbesondere Druckresistenz und/oder Dichtigkeit.

Eine spezielle Anwendung der Rohrkupplung betrifft eine modulare Anordnung von Gasmotoren als Abschlusselement für das letzte Modul. Dabei sind in einer Reihenfolge angeordnete Gasmotoren miteinander über Rohrleitungen bzw. Stutzen verbunden. Dem vom letzten Gasmotor in der Reihe abragenden Stutzen fehlt es jedoch an einer Anbindung. Zum Abschliessen und Kennzeichnen dieses "letzten" Stutzens kann dieser einfach und zuverlässig mittels einer erfindungsgemässen Rohrkupplung versehen und damit abgeschlossen werden.

Die Erfindung ist selbstverständlich nicht auf das dargestellte Ausführungsbeispiel eingeschränkt. Die einzelnen, oben beschriebenen Merkmale können gemeinsam, aber auch unabhängig voneinander verwirklicht sein. Das Wesen betrifft eine Rohrkupplung mit Spannmittel, auch "Grip-Kupplung" genannt, mit eingesetztem bzw. integriertem Deckel als Abschlusselement, insbesondere für eine Rohrleitung.

### Bezugszeichenliste

- 1: Rohrkupplung
- 2: Schellenband
- 3: Spannmittel
- 4: Flansch
- 5: Dichtung
- 6: Deckel
- 7: Konisch ausgebildeter Abschnitt des Deckels 6
- 8: Zylinderförmiger Abschnitt des Deckels 6
- 9: Wölbung des Deckels 6
- 10: Verankerungsring
- 11: Ende Rohrkupplung mit Verankerungsring
- 12: Ende Rohrkupplung mit Deckel
- 12: Rohr
- 14: Bodenabschnitt des Deckels

## Patentansprüche

1. Anordnung mit einer Rohrkupplung (1) mit einem Deckel (6), wobei die Rohrkupplung (1) mit einem ihrer Enden (11) an ein Rohr (13) ankuppelbar ist und die ein Schellenband (2) und ein Spannmittel (3) zum Verspannen des Schellenbandes (2) aufweist, **wobei** der Deckel (6) am anderen Ende (12) der Rohrkupplung (1) vorgesehen ist und in das Schellenband (2) eingesetzt und durch Verspannen des Spannmittels (3) des Schellenbandes (2) festlegbar ist, **dadurch gekennzeichnet, dass** der Deckel (6) topfförmig ausgebildet ist und der Bodenabschnitt des topfförmigen Deckels (6) eine Wölbung (9) aufweist, welche in das Innere der Rohrkupplung (1) ragt.

2. Anordnung nach Anspruch 1, **dadurch gekennzeichnet, dass** ein Dichtelement (5), vorzugsweise aus einem elastischen Material, wie z. B. Gummi, im Schellenband (2) vorgesehen ist, welches die Innenwand des Schellenbandes (2) vorzugsweise vollflächig auskleidet.

3. Anordnung nach Anspruch 2, **dadurch gekennzeichnet, dass** ein Endabschnitt des Dichtelementes (5) zwischen dem Schellenband (2) und dem Deckel (6) eingespannt ist.

4. Anordnung nach einem der Ansprüche 1 bis 3, **dadurch gekennzeichnet, dass** der Randbereich des Deckels (6) einen konisch ausgebildeten Abschnitt (7) aufweist, der sich zum freien Ende hin erweitert und dessen dem Schellenband (2) zugewandte Fläche vorteilhaft an einem entsprechend geformten Abschnitt des Dichtelementes (5) formschlüssig anliegt.

5. Anordnung nach einem der Ansprüche 1 bis 4, **dadurch gekennzeichnet, dass** der Deckel (5) einen im Wesentlichen zylinderförmigen Abschnitt (8) aufweist, der vorzugsweise an einem entsprechend geformten Abschnitt des Dichtelementes (5) formschlüssig anliegt.

6. Anordnung nach Anspruch 5, **dadurch gekennzeichnet, dass** der zylinderförmige Abschnitt (8) des Deckels (6) an den konisch ausgebildeten Abschnitt (7) des Deckels (6) in Richtung des Inneren der Rohrkupplung (1) anschliesst.

7. Anordnung nach einem der Ansprüche 1 bis 6, **dadurch gekennzeichnet, dass** der Deckel (6) vollständig von dem Schellenband (2) umgeben ist.

8. Anordnung nach einem der Ansprüche 1 bis 7, **dadurch gekennzeichnet, dass** das Schellenband (2) an zumindest einer seiner Stirnseiten einen nach innen gerichteten Flansch (4) aufweist, der einen Anschlag für den Deckel (6) im Inneren des Schellenbandes (2) ausbildet.

9. Anordnung nach einem der Ansprüche 1 bis 8, **dadurch gekennzeichnet, dass** das Schellenband (2) aus einem durchgehenden, rohrförmig vorgebogenen Band gebildet ist, wobei im Bereich der Enden des Bandes ein Spalt ausgebildet ist, dessen Breite durch das Spannmittel (3) veränderbar ist.

10. Anordnung nach einem der Ansprüche 1 bis 9, **dadurch gekennzeichnet, dass** ein vorzugsweise kegelstumpfförmiger, in das Innere der Rohrkupplung (1) ragender Verankerungsring (10) vorgesehen ist, der vorteilhaft im Bereich des Endes (11) der Rohrkupplung (1) angeordnet ist, das dem Ende (12) der Rohrkupplung (1) mit dem Deckel (6) abgewandt ist.

11. Verwendung einer Anordnung nach einem der Ansprüche 1 bis 10 zum Abschliessen einer Rohrleitung (13).

12. Verwendung einer Anordnung nach Anspruch 10 zum vorübergehenden Abschliessen einer Rohrleitung (13) bei der Prüfung einer oder mehrerer Rohrfunktionen, insbesondere Druckresistenz und/oder Dichtigkeit.

13. Verwendung einer Anordnung nach einem der Ansprüche 1 bis 10, bei einer modularen Anordnung von Gasmotoren als Abschlusselement für das letzte Modul.

## Claims

1. Arrangement of a pipe coupling (1) with a cover (6), wherein the pipe coupling (1) can be coupled with one of its ends (11) to a pipe (13) and which has a clamping band (2) and a tightening means (3) for tightening the clamping band (2), wherein the cover (6) is provided on the other end (12) of the pipe coupling (1) and is inserted in the clamping band (2) and can be secured by tightening the tightening means (3) of the clamping band (2), **characterized in that** the cover (6) is pot-shaped, wherein the bottom section of the pot-shaped cover (6) has a convexity (9), which advantageously projects into the interior of the pipe coupling (1).

2. Arrangement according to claim 1, **characterized in that** a sealing element (5), preferably made of an elastic material, e.g. rubber, is provided in the clamping band (2), which preferably lines the whole surface of the inside wall of the clamping band (2).

3. Arrangement according to claim 2, **characterized in that** an end segment of the sealing element (5) is clamped between the clamping band (2) and the cover (6).

4. Arrangement according to one of claims 1 to 3, **characterized in that** the edge region of the cover (6) has a conically shaped segment (7), which becomes wider towards the free end and its surface facing the clamping band (2) advantageously has a positive fit on a correspondingly shaped segment of the sealing element (5).

5. Arrangement according to one of claims 1 to 4, **characterized in that** the cover (5) has an essentially cylindrical segment (8), which preferably has a positive fit on a correspondingly shaped segment of the sealing element (5).

6. Arrangement according to claim 5, **characterized in that** the cylindrical segment (8) of the cover (6) connects to the conically shaped segment (7) of the cover (6) in the direction of the inside of the pipe coupling (1).

7. Arrangement according to one of claims 1 to 6, **characterized in that** the cover (6) is completely surrounded by the clamping band (2).

8. Arrangement according to one of claims 1 to 7, **characterized in that** the clamping band (2) has an inward-directed flange (4) on at least one of its end faces, which forms a stop for the cover (6) inside the clamping band (2).

9. Arrangement according to one of claims 1 to 8, **characterized in that** the clamping band (2) is formed from a continuous, tubular pre-curved band, wherein a gap is formed in the region of the ends of the band, the gap width being variable by means of the tightening means (3).

10. Arrangement according to one of claims 1 to 9, **characterized in that** an anchoring ring (10), preferably of truncated cone shape, and projecting into the interior of the pipe coupling (1), is provided, which advantageously is arranged in the region of the end (11) of the pipe coupling (1) that is opposite the end (12) of the pipe coupling (1) with the cover (6).

11. Use of an arrangement according to one of claims 1 to 10 for closing off a pipeline (13).

12. Use of an arrangement according to claim 10 for the temporary closing-off of a pipeline (13) when testing one or more pipe functions, especially resistance to pressure and/or for leak testing.

13. Use of a pipe coupling according to one of claims 1 to 10, in a modular arrangement of gas engines as a closing element for the last module.

## Revendications

1. Dispositif avec un raccord de tube (1) avec un couvercle (6), dans lequel le raccord de tube (1) peut être accouplé à une de ses extrémités (11) à un tube (13) et qui présente une bande de collier (2) et un moyen de serrage (3) pour mettre sous contrainte la bande de collier (2), dans lequel le couvercle (6) est prévu à l'autre extrémité (12) du raccord de tube (1), et le couvercle (6) est placé dans la bande de collier (2) et peut être fixé par mise sous contrainte du moyen de serrage (3) de la bande de collier (2), **caractérisé en ce que** le couvercle (6) est conçu en forme de cuvette et **en ce que** la section de fond du couvercle en forme de cuvette (6) présente une courbure (9), laquelle dépasse à l'intérieur du raccord de tube (1).

2. Dispositif selon la revendication 1, **caractérisé en ce qu'**un élément d'étanchéité (5), de préférence en matière élastique comme, par exemple, du caoutchouc, est prévu dans la bande de collier (2), lequel revêt, de préférence sur toute la surface, la paroi intérieure de la bande de collier (2).

3. Dispositif selon la revendication 2, **caractérisé en ce qu'**une section d'extrémité de l'élément d'étanchéité (5) est serrée entre la bande de collier (2) et le couvercle (6).

4. Dispositif selon l'une des revendications 1 à 3, **caractérisé en ce que** la zone périphérique du couvercle (6) présente une section conçue en forme de cône (7) qui s'élargit vers l'extrémité libre et dont la surface orientée vers la bande de collier (2) est de préférence adjacente et engage une section formée en conséquence de l'élément d'étanchéité (5).

5. Dispositif selon l'une des revendications 1 à 4, **caractérisé en ce que** le couvercle (5) présente une section essentiellement en forme de cylindre (8) qui est de préférence adjacente et engage une section formée en conséquence de l'élément d'étanchéité (5).

6. Dispositif selon la revendication 5, **caractérisé en ce que** la section en forme de cylindre (8) du couvercle (6) se raccorde à la section conçue en forme de cône (7) du couvercle (6) dans le sens de l'intérieur du raccord de tube (1).

7. Dispositif selon l'une des revendications 1 à 6, **caractérisé en ce que** le couvercle (6) est entouré intégralement de la bande de collier (2).

8. Dispositif selon l'une des revendications 1 à 7, **caractérisé en ce que** la bande de collier (2) présente, sur au moins un de ses côtés frontaux, une bride orientée vers l'intérieur (4), qui constitue une butée pour le couvercle (6) à l'intérieur de la bande de collier (2).

9. Dispositif selon l'une des revendications 1 à 8, **caractérisé en ce que** la bande de collier (2) est formée d'une bande traversante, courbée au préalable en forme de tube, dans lequel dans la zone des extrémités de la bande est formée une fente dont la largeur peut être modifiée par le moyen de serrage (3).

10. Dispositif selon l'une des revendications 1 à 9, **caractérisé en ce qu'**est prévue une bague d'ancrage (10), de préférence en forme de cône tronqué, dépassant à l'intérieur du raccord de tube (1), qui est disposée de façon avantageuse dans la zone de l'extrémité (11) du raccord de tube (1), qui est opposée à l'extrémité (12) du raccord de tube (1) avec le couvercle (6).

11. Utilisation d'un dispositif selon l'une des revendications 1 à 10 pour l'obturation d'une canalisation (13).

12. Utilisation d'un dispositif selon la revendication 10 pour l'obturation temporaire d'une canalisation (13) lors de la vérification d'une ou de plusieurs fonctions du tube, plus particulièrement de la résistance à la pression et / ou de l'étanchéité.

13. Utilisation d'un dispositif selon l'une des revendications 1 à 10, dans un dispositif modulaire de moteurs à gaz en tant qu'élément d'obturation pour le dernier module.
